(19) Europäisches Patentamt
European Patent Office
Office européen des brevets

(11) **EP 2 477 397 A1**

(12) **EUROPEAN PATENT APPLICATION**

(43) Date of publication:
**18.07.2012 Bulletin 2012/29**

(21) Application number: **11150753.9**

(22) Date of filing: **12.01.2011**

(51) Int Cl.:
*H04N 7/173* (2011.01)          *H04L 29/06* (2006.01)
*H04N 21/845* (2011.01)        *H04N 21/61* (2011.01)
*H04N 21/63* (2011.01)          *H04N 21/2385* (2011.01)
*H04N 21/438* (2011.01)        *H04N 7/24* (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NXP B.V.**
**5656 AG Eindhoven (NL)**

(72) Inventor: **Collard, Arnaud**
**Redhill, Surrey RH1 1DL (GB)**

(74) Representative: **Williamson, Paul Lewis**
**NXP Semiconductors**
**Intellectual Property and Licensing**
**Red Central**
**60 High Street**
**Redhill**
**Surrey RH1 1NY (GB)**

(54) **Handling the initialization for HTTP streaming of multimedia files via parallel TCP connections**

(57)     A method of streaming a media file from a sever hosting the media file to a media playback device via a Transmission Control Protocol, TCP, communication link is presented. The method comprises the steps of: splitting the media file into a plurality of file segments; allocating a plurality of TCP socket connections between the server and the playback device; and transmitting the file segments from the server to the playback device over the allocated plurality of TCP socket connections, wherein at least two of the plurality of the file segments are transmitted over different TCP socket connections.

**FIG. 6**

**Description**

The present invention relates to streaming media, and more particularly, to streaming a media file using the Transmission Control Protocol (TCP).

Streaming a media file comprising Audio/Video (A/V) content over the internet is now a major feature used by mostly all users of the World Wide Web. Specific protocols have been put in place to enable the streaming of A/V content. These protocols are mostly based on RTSP/UDP protocols, as the one defined in the 3GPP standard.

To enhance streaming over the internet, some streaming protocols have been recently introduced. These protocols, known as "HyperText Transfer Protocol (HTTP) streaming" protocols, are using TCP protocols instead of RTSP/TCP/UDP protocols to transfer audio/video data.

The TCP is a communication protocol used to connect computer systems in a network, and the HyperText Transfer Protocol (HTTP) is an application member on top of the TCP.

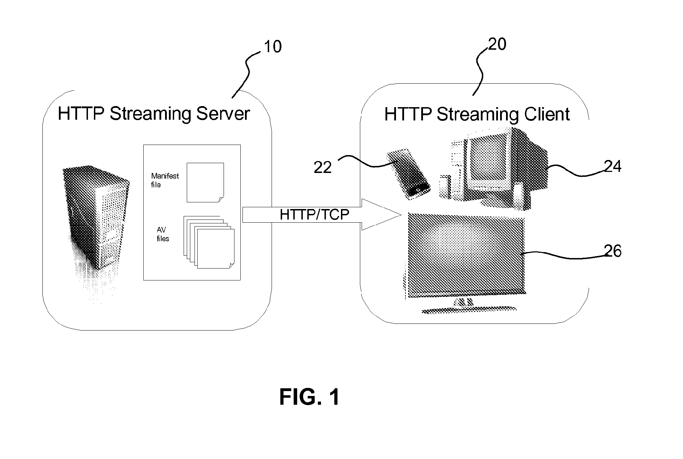

Figure 1 illustrates a typical setup for HTTP streaming of AN content from a server 10 to a client 20 (such as a mobile phone 22, personal computer 24 or a internet enabled television 26).

In all streaming protocols, an important consideration is the reactivity of the streaming client 20 when opening a new streaming session. A long initialization time period between the moment a user selects A/V content and the moment it is actually played on the client device 20 may hinder the usability of the device 20 and/or detract from the user experience. It is known that an initialization time period of granted than four (4) seconds may be unacceptable for the user. Conversely, a small initialization time period enables allow a user to explore more advanced features such as switching between several streaming sessions.

Proposed is a method for handling the initialization phase of an A/V streaming session based on the TCP and the HTTP. Embodiments may therefore improve the speed of the buffering phase when compared to conventional A/V streaming methods. Accordingly, a user experience may be enhanced as a result of reducing the initial waiting time.

Embodiments may employ parallel TCP connections between the client and the server, as well as the partial download feature of the HTTP 1.1 protocol. In this way, it may be possible to perform parallel downloads of A/V data chunks.

The partial download feature introduced by the HTTP 1.1 protocol may be leveraged to enable the downloading of a part of an A/V file by using a specific HTTP signaling process. Such a feature is supported by most HTTP streaming servers as it is a common feature for new Web servers and HTTP streaming servers.

According to an aspect of the present invention, there is provided a method of streaming a media file from a sever hosting the media file to a media playback device via a Transmission Control Protocol, TCP, communication link, the method comprising the steps of: splitting the media file into a plurality of file segments; allocating a plurality of TCP socket connections between the playback device and the server; and transmitting the file segments from the server to the playback device over the allocated plurality of TCP socket connections, wherein at least two of the plurality of the file segments are transmitted over different TCP socket connections.

The number of allocated TCP socket connections may be determined according to network conditions, network characteristics (WIFI/HSDPA) and Hardware/software resources available at client or server, and the number of segments the media file is split into may be determined according to the number of TCP socket connections to be used.

The step of splitting the media file may comprise: splitting the media file into a plurality of intermediate media files; and splitting each of the plurality of intermediate media files into a plurality of file segments.

According to another aspect of the present invention, there is provided a media server adapted to stream a media file to a media playback device via a Transmission Control Protocol, TCP, communication link, the server comprising: a file processing unit adapted to a split the media file into a plurality of file segments; a communication unit adapted to allocate a plurality of TCP socket connections between the server and the playback device, and to transmit the file segments from the server to the playback device over the allocated plurality of TCP socket connections, wherein at least two of the plurality of the file segments are transmitted over different TCP socket connections.

According to yet another aspect of the present invention, there is provided a media playback device adapted to stream a media file from a media server via a Transmission Control Protocol, TCP, communication link, the media playback device comprising: a communication unit adapted to allocate a plurality of TCP socket connections between the server and the playback device, and to receive a plurality file segments of the media file from the server over the allocated plurality of TCP socket connections, wherein at least two of the plurality of the file segments are transmitted over different TCP socket connections.

Also proposed are enhancements that may further reduce initialization time for a specific HTTP streaming protocol, called 3GPP Adaptive Streaming.

The above and other features and advantages of the present invention will become more apparent by describing in detail exemplary embodiments thereof with reference to the attached drawings in which:

FIG. 1 illustrates a typical setup for HTTP streaming of A/V content from a server to a client;

FIG. 2 illustrates how the data of an AV data stream is made available as a set of files of equal (playback) duration;

FIG. 3 illustrates a streaming protocol exchange between a HTTP Live Streaming client and server;

FIG. 4 illustrates a typical stream flow inside a HTTP streaming application;

FIG. 5 is a flow diagram of a method according to an embodiment of the invention;

FIG. 6 illustrates an example of streaming A/V data using two TCP connections according to an embodiment of the invention;

FIG. 7 is a chart showing the comparison of resultant buffering time for streaming data over one or two TCP connections of a HSDPA network;

FIG. 8 is a chart showing the comparison of resultant buffering time for streaming data over one or two TCP connections of a WIFI network;

FIG. 9 illustrates a typical protocol exchange between one 3GPP Adaptive Streaming server and one client;

FIG. 10 illustrates an example of streaming A/V data using two TCP connections according to another embodiment of the invention, wherein the streaming protocol is 3GPP Adaptive Streaming;

FIG. 11 illustrates an example of streaming A/V data using four TCP connections according to another embodiment of the invention, wherein an internal buffer is used to store the AN data; and

FIG. 12 shows the 3GP format of an A/V data file according to an embodiment of the invention.

The inventors have identified that reducing the initialization time of a streaming session at the client side may improve a user experience. It has been further identified that a significant portion of the initialization time is created by the client waiting to receive a sufficient amount of A/V data to fill data buffers before playback of the A/V data.

Proposed is the optimization of the A/V data downloading process so as to reduce the time taken to fill data buffers (i.e. the buffering time).

A/V data is typically available via a set of files which are part of a complete A/V stream. A client may require a predetermined amount of A/V data to fill a buffer before playback can commence. The client will typically know (at any particular instant) which part of the file(s) it needs to download for this buffering process.

The inventors propose to download A/V data files in several parts and in parallel at the same time using a plurality of TCP socket connections between the client and server. Such a parallel downloading process will typically enable an increase in overall TCP throughput. Thus, for a predetermined amount of data necessary to fill the client buffer, embodiments may be used to reduce the buffering time and therefore reduce the initialization time of a streaming session. To share the A/V data among the available TCP connections, one or more A/V files may be split into chunks. Chunks of different portions of a given file may then be downloaded on different TCP connections. Such a process is made possible using a "partial download" feature of the HTTP 1.1, available via "Range" request.

The following three known HTTP streaming protocols have been identified as being particularly suitable for embodiments of the invention: Apple™ HTTP Live Streaming, IIS Smooth Streaming Transport Protocol; and 3GPP Adaptive Streaming. For these protocols, there is a set of common characteristics as follows:

- The client requesting a manifest file from the server, wherein the manifest file describes the streaming session.
- The audio or/and video compressed data is available to the client on a server via a set of files. In other words, the complete A/V data of media content (such as a movie) is split into several files. The URLs of these files are deduced from the parsing of the manifest file.
- The client requests A/V data files by using HTTP GET requests through TCP protocols.
- Each audio or video file is typically about several seconds of duration in terms of playback duration (typically from 2 to 10 seconds).

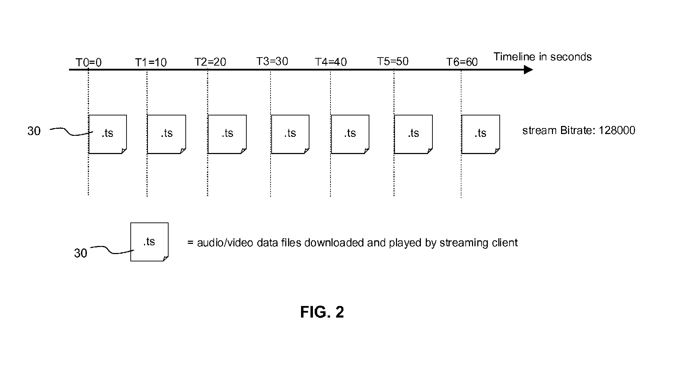

Referring to Figure 2 it is shown that the data of an AV data stream may be made available as a set of media files 30 which are of equal (playback) duration.

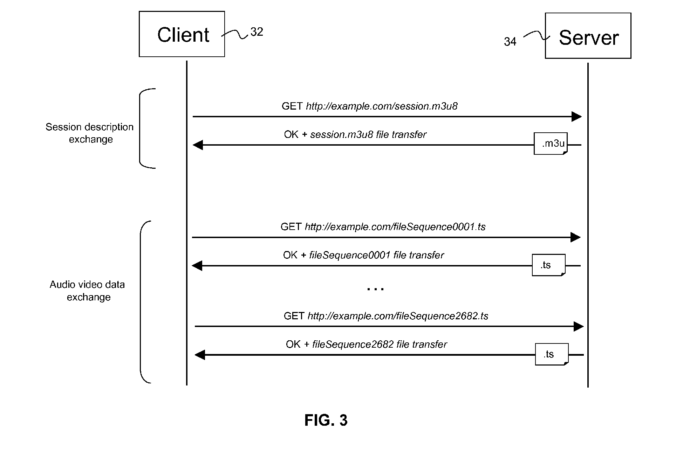

Figure 3 illustrates a streaming protocol exchange between a HTTP Live Streaming client 32 and server 34. As shown in this figure, the client 32 first requests through TCP/HTTP to the server 34 the manifest file (session.m3u) that describes the streaming session. The server 34 sends this file to the client 34 and the client 34 parses it to discover the URLs of the AN files (underlined as session description exchange step). Then the client 32 sequentially requests A/V files and receives them from the server through TCP/HTTP for the buffering and the playback of the media (underlined as audio/video data exchange step).

Thus, it is proposed to create multiple TCP connections, mapped on TCP sockets, to transfer several files between a TCP client and a TCP server.

Investigations have shown that it is more efficient in terms of throughput to download several files in parallel than to download the same files sequentially using a unique TCP connection. It is supposed that this results from TCP protocol behaviors and the following effects:

- Downloading in parallel limits the «slow start» effect of the TCP congestion control algorithm applied by TCP servers. The raise of TCP throughput just after connections establishment is thus boosted.
- It limits bandwidth losses due to random network errors on lossy networks such as WI-FI or 3G/HSDPA. While waiting for data on one connection because of packet retransmission, other connection(s) is (are) still alive.
- It plays with the fairness of the TCP protocol. One client with two connections on the total internet network chain will be seen as two TCP clients, and so will tend to have more available bandwidth than a client with only one TCP connection.

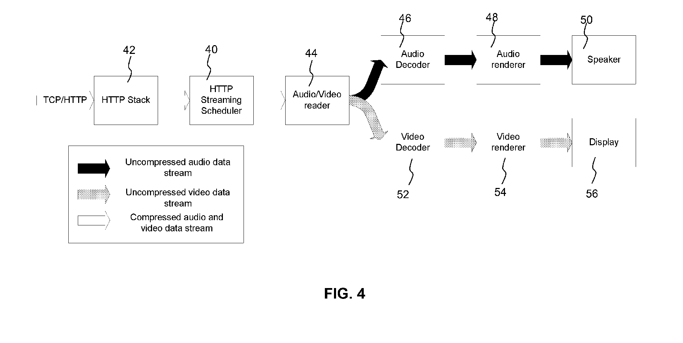

Figure 4 illustrates a typical stream flow inside a HTTP streaming application. Among the components of this application, there is a HTTP Streaming Scheduler 40 component responsible for scheduling the request of A/V data files through the HTTP and receiving the data. The HTTP Streaming Scheduler 40 requests data from a HTTP stack 42, and provides the data (received in response to the request) to an A/V Reader 44 component which is adapted to parse the AN data. The parsed audio data is then passed through an Audio Decoder 46 and Audio Renderer 48 before being provided to a speaker 50 for audio playback. Similarly, the parsed video data is passed through a Video Decoder 52 and Video Renderer 54 before being provided to a display 56 for video playback. It will be understood that the decoders 46, 52 and renderers 48, 52 may be provided separately or within a single AN processing unit.

Embodiments will typically be implemented inside the HTTP Streaming Scheduler 40 component.

We will now describe an algorithm used in embodiments of the invention. This algorithm will be described in relation to several usage examples, including the following:

- According to HTTP streaming protocols, compressed audio and video data could be either interleaved in the same files, or split in distinct files; and
- According to the duration of the audio/video files, it may be needed to download one or more audio/video files, depending on the buffering time required at HTTP streaming client side.

For the purpose of this description, we will use the following definitions:

BTime - the buffering time in milliseconds that is required at the HTTP streaming client side before starting the playback;
ABitrate - the bitrate associated with the compressed audio data, expressed in bits per second;
VBitrate - the bitrate associated with the compressed video data, expressed in bits per second;
VFDuration - the duration in millisecond of one compressed audio/video file;
AFDuration - the duration in millisecond of one compressed audio file, assuming that audio is separated from video data;
NConn - the number of TCP connections used in parallel between the client and the server. NConn is equal or above two (2);
NVConn - the number of TCP connections allocated specifically to the downloading of video data (if audio and video data are not in the same file);
NAConn - the number of TCP connections allocated specifically to the downloading of audio data (if audio and video data are not in the same file);
NVFile - the number of audio/video or video only files to be downloaded in order to fill the client buffer;
NAFile - the number of audio files to be downloaded to fill the client buffer (assuming that audio is separated from video data);
NASplit - the number of splits on a given audio file when downloading it (if audio and video data are not in the same file);
NVSplit - the number of splits on a given video file when downloading it;
INT() - the integer part of any floating computation, rounded to the lowest integer; and
RANGE(x) - the HTTP partial download request for chunk x when splitting audio/video files on several TCP connections.
For the above definitions, where the audio data is interleaved with video data in the same files, all audio-only related definitions are not applicable, and all video-only definitions can be applied for audio/video ones.
Re-partition of TCP connections between audio and video tracks

In the case that audio and video compressed data are in separate files, it is first to be decided how many connections will be used to download audio files (the rest will be for the video).

Assuming that the audio and the video bitrates are known, TCP connections are dedicated to either audio or video according to the bitrates to try to split (as efficiently as possible) the download efforts among all TCP connections (given that a client will try to download the same duration of audio and video data before starting playback).

The following formula (i) is applied to obtain the number of connections reserved for audio:

$$NAConn = INT\left(\frac{\left(ABitrate \times NConn\right) + ABitrate + VBitrate - 1}{VBitrate + ABitrate}\right) \qquad \text{(i).}$$

Thus, the number of reserved TCP connections for video can be defined by the following formula (ii):

$$NVConn = NConn - NAConn \qquad \text{(ii).}$$

Computation of implied audio/video files

The number of files needed to be downloaded in order to fill the client buffer can be calculated using the following equations (iii) and (iv):

$$NAFile = INT\left(\frac{BTime + AFDuration - 1}{AFDuration}\right) \qquad \text{(iii)}$$

$$NVFile = INT\left(\frac{BTime + VFDuration - 1}{VFDuration}\right) \qquad \text{(iv).}$$

Correction on the number of used TCP connections for audio and video

For a predetermined number of TCP connections, it may be useless to use all of these connections in cases where the number of files to be downloaded is not a multiple of the number of TCP connections. For example, for 4 files to download with 5 available TCP connections, there is no useful split of the files to use all of the available TCP connections, and so only 4 TCP connections are chosen to be used. The following equations (v) and (vi) may be used are determined a number of connections to utilise:

$$NAConn = INT\left(\frac{NAConn}{NAFile}\right) \times NAFile \qquad \text{(v)}$$

$$NVConn = INT\left(\frac{NVConn}{NVFile}\right) \times NVFile \qquad \text{(vi)}$$

Use of the content range feature of HTTP 1.1 protocol

Once the number of TCP connections for audio and video have been determined, along with the number of files to download, the files are split in case the number of A/V files is strictly lower than the number of TCP connections. This is done by using a content range parameter of the HTTP 1.1 protocol. The equations (vii) and (viii) used to determine the number of splits may be represented as follows:

$$NASplit = INT\left(\frac{NAConn}{NAFile}\right) \qquad (vii)$$

$$NVSplit = INT\left(\frac{NVConn}{NVFile}\right) \qquad (viii).$$

Finally, for a given A/V file, NVSplit HTTP "GET" requests are used to obtain NVSplit chunks of the file on separate TCP connections. The HTTP content range sequences used to get the portions of the files can be represented by the following equation (ix):

$$RANGE(1) = 0 - \left(\frac{VBitrate \times VFDuration}{NVSplit}\right)$$

$$RANGE(2) = \left(\frac{VBitrate \times VFDuration}{NVSplit}\right) - \left(\frac{2 \times VBitrate \times VFDuration}{NVSplit}\right)$$

$$\dots$$

$$\dots$$

$$RANGE(NVSplit) = (NVSplit - 1) \times \left(\frac{VBitrate \times VFDuration}{NVSplit}\right) \qquad (xi)$$

Further optimizations in case of a single audio/video file split over several TCP connections.

In most cases, the buffering time of a player (which is typically four seconds), will be lower than the duration of the audio/video files (which is typically 10 seconds). Thus, for such cases, it may only be required to download a part of the file in order to fill the application buffer.

Using the above mentioned method, and considering an example using two (2) TCP connections, it may be required to download two chunks of five seconds each. This is not optimal as it means that there is no useful data for the buffering inside the second chunk. Instead, it is proposed to download the two first seconds on the first TCP connection, and the remaining eight seconds on the second TCP connection. In this way, full parallelization of useful data among the 2 TCP connections is achieved.

The ranges used in this case may therefore be represented by the following equations (x):

$$RANGE(1) = 0 - \left( \frac{VBitrate \times BTime}{NVSplit} \right)$$

$$RANGE(2) = \left( \frac{VBitrate \times BTime}{NVSplit} \right) - \left( \frac{2 \times VBitrate \times BTime}{NVSplit} \right)$$

…

$$RANGE(NVSplit) = \left( NVSplit - 1 \right) \times \left( \frac{VBitrate \times BTime}{NVSplit} \right) \qquad (x)$$

It is noted that the available range in HTTP 1.1 is expressed in bytes, not in the time domain. So here one makes the approximation that the content bitrate of any portion of the file does not vary a lot compared to the content bitrate computed on the whole file.

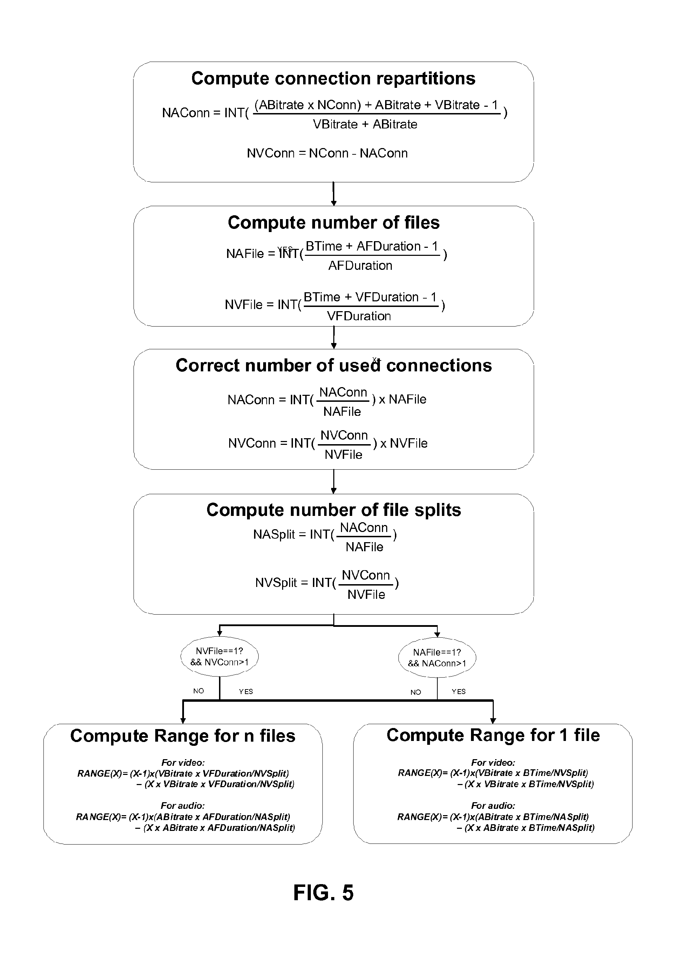

Figure 5 is a flow diagram representing the decision algorithm described above using equations (i) through (x).

Evaluation example and results

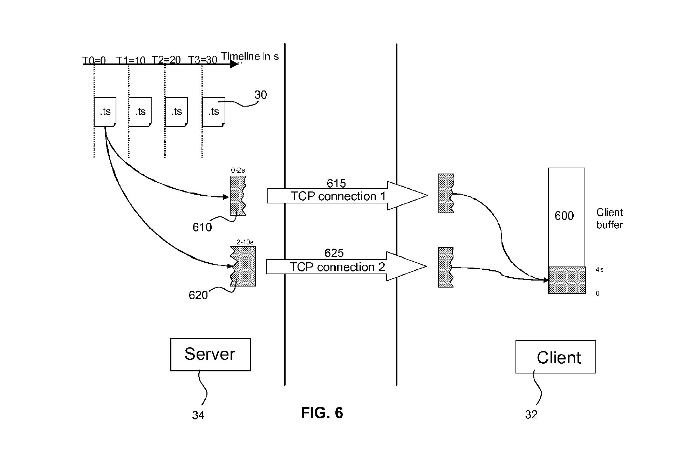

Referring to Figure 6, the use and associated benefits of embodiments will now be described. In this example, the following characteristics are noted:

- The audio/video player buffer 600 time is 4 seconds;
- The audio and the video data are interleaved in the same files 30;
- 2 TCP connections (615 and 625) are used in parallel;
- The A/V file duration is 10 seconds; and
- The A/V bitrate is 1 Mbps.

In this embodiment, the A/V file 30 is split into two chunks. The first chunk 610 has the range of 0-250000 bytes (which by approximation corresponds to the range of 0-2 seconds in the time domain), and is downloaded on the first TCP connection 615. The second chunk 620 has the range of 250000 - End-of-File (EOF) (which corresponds to range 2-10 seconds in the time domain), and is downloaded on the second TCP connection 625.

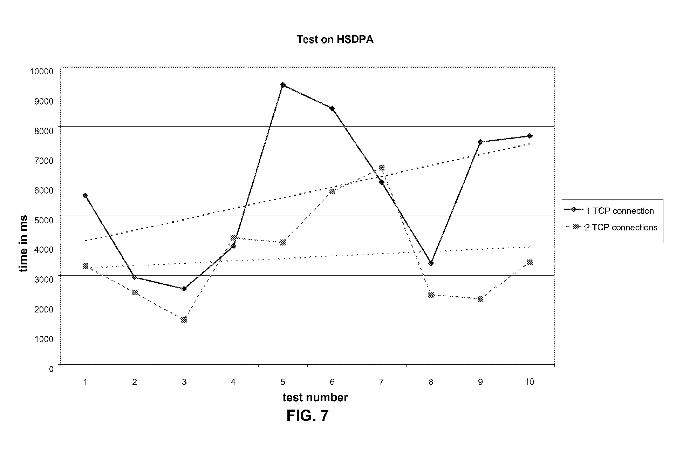

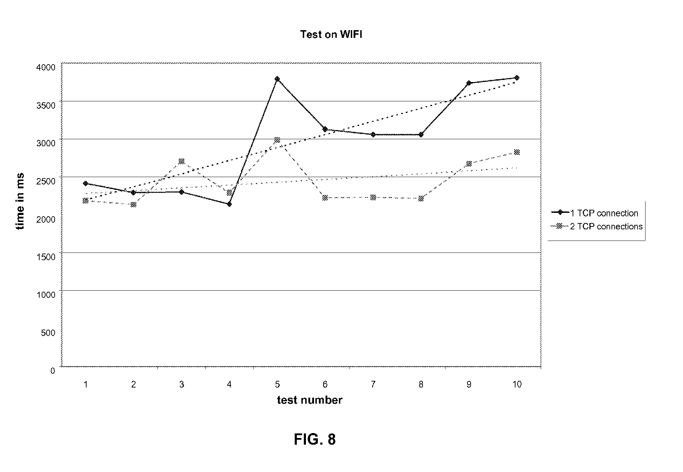

Figures 7 and 8 chart the results of implementing this example on HSDPA and WI-FI networks, respectively, where:

- The time spent to download necessary buffering data (i.e. data for the range 0-4 seconds in the file) using only 1 TCP connection is determined as a first measure; and
- The time spent to download the same data on 2 parallel TCP connections is determined as a second measure.

Tests were been performed 10 times, to average the fact that measurements can vary from one test to another, resulting from moving network conditions.

Embodiments can be used in applications that are capable of handling HTTP streaming sessions. One such typical application is an A/V player that can be used to watch on demand movies, live TV, or listen on demand music or live radio. Such applications can be provided, for example, on a TV (via optional set-top box), personal computers, mobile phones, internet tablets, etc. In other words such application can be implemented on portable or non portable devices connected to internet and/or a network.

Applications running on devices connected to lossy networks such as WI-FI, 3G, HSDPA network, may realise greater benefit from embodiments of the invention.

Embodiments may be applicable to all current and future HTTP streaming protocols have the following characteristics:

- The client requests the A/V data using HTTP through the "GET" method on top of the TCP;
- The partial download feature of HTTP 1.1 is available at server side;
- The server informs the client about the audio and video bitrate; and

- The server informs the client about the duration of audio/video files.

Enhancements may further reduce initialization time for a specific HTTP streaming protocol, called 3GPP Adaptive Streaming. 3GP is a known protocol standardized by the 3GPP group, and has the following characteristics:

- A specific file is used to describe a data streaming session. This file is first downloaded and parsed by the client. This file will be referred to hereinafter as the manifest file. The manifest file is an XML file with known proprietary tags.
- A companion file is used to retrieve further A/V characteristics, such as decoder specific information. This companion file must be downloaded by the client and is a 3GP file; and
- The file format used to store compressed A/V data is a derivative of the 3GP file format. The compressed A/V data are interleaved in the same file.

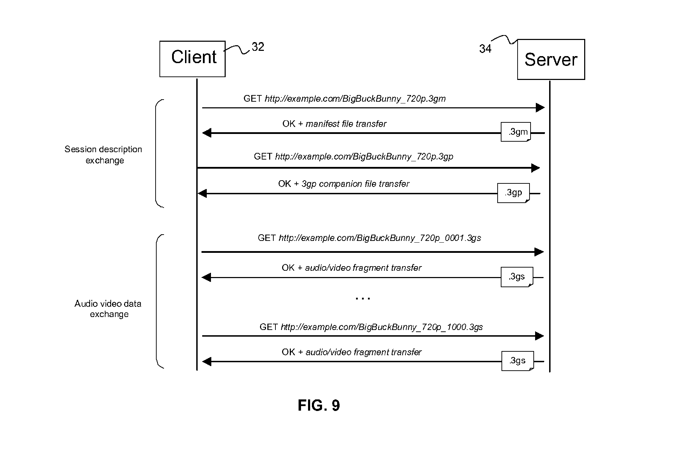

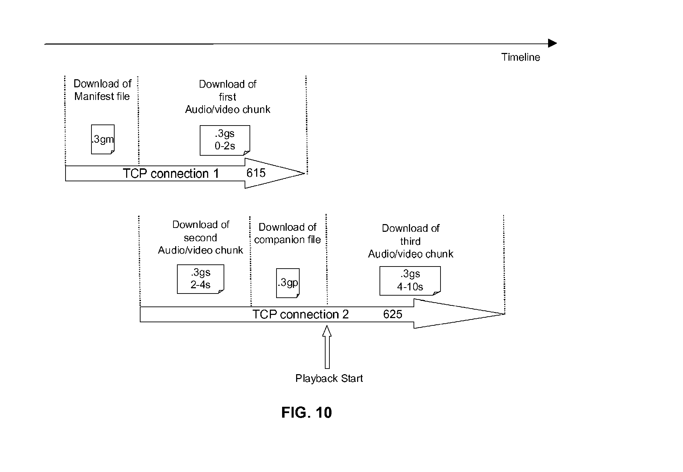

Figure 9 illustrates a typical protocol exchange between one 3GPP Adaptive Streaming server and one client. As shown in Figure 9, the client 32 first requests, through TCP/HTTP to the server 34, the manifest file (here the manifest file is named "BigBugBunny_720p.3gm") that describes the streaming session. The server 34 then transmits the requested manifest file to the client 34 and the client 34 parses it to discover the URLs of the companion file ("BigBugBunny_720p.3gp") and the URLs of A/V files. The client 32 then downloads the companion file. This step is referred to (and labeled in Figure 10) as the "session description exchange" step. The client 32 then sequentially requests A/V files and receives them from the server through TCP/HTTP for the buffering and the playback of the media (labeled in Figure 10 as "audio/video data exchange" step).

As mentioned above, for 3GPP an additional file (referred to as the 3GP companion file) is downloaded and this is mandatory before starting playback as it contains important information. This additional file means some additional time may be spent during initialization phase because:

(i) The client must wait for the download of the full audio/video file implied in the buffering process if he wants to download the companion file in a second phase;
(ii) The client must open a new TCP connection to download the file (if there is no already opened TCP connection). Typically, establishing a TCP connection takes around 250 ms to be completed; and
(iii) The client must receive the companion file using a HTTP "GET" request. Considering that this file is very small (typically less than 1 KB), it will also takes typically 250 ms to receive the file.

The first extra time (i) can be very high, as typically the client has a 4 seconds internal buffer, whereas the audio/video file duration could be about 10 seconds. So the client has to wait the download of additional 6 seconds, whereas without the extra need of the companion file, it could have started the playback after having downloaded the first 4 seconds of data. One solution could be to start downloading the 3GP companion file before the audio/video data, but we will see later that this solution is not efficient if combined with embodiments already proposed earlier.

The second point (ii) can be addressed by re-using the TCP connection used to download the manifest file, or the audio/video file(s) (presuming that all of these files are on the same server).

The third extra time (ii) is mandatory. This time may vary greatly according to server load and network conditions.

The inventors propose the following concepts, coupled with those embodiments already proposed above, to address the extra initialization times associated with using the 3GPP.

In order to receive as fast as possible all necessary data for starting playback, the previously detailed embodiments of the invention may be modified to include (as efficiently as possible) the download of the 3GP companion file.

The inventors first propose to limit the amount of A/V data to be downloaded in earlier described embodiments in order to start the download of the 3GP companion file quicker. This may be done using the partial download feature of the HTTP 1.1 protocol.

The inventors then propose a particular download schedule as an extension of the earlier described embodiments for the download of the companion file. Considering that several TCP connections are used in parallel to download parts of A/V data files, it is proposed to download the 3GP companion file by using the TCP connection that has completed the download of the AN data first. In this way, the download of 3GP companion file is done in parallel with the other TCP connections that have not yet finished downloading the A/V data files. This approach is based on the fact that when running several TCP connections in parallel, the total throughput on the link between client and server is typically never 100% fairly shared by the TCP connections, and so one TCP connection will finish A/V data downloading before the others.

The inventors also propose ways to permit the reordering of parsed data by the media player.

With early described embodiment more data than actually needed for the internal buffering may be received, and so the media player may start playback of the media before the end of reception of the last chunk of A/V data. More specifically, this occurs if the playback duration of an A/V file at the server side is not a multiple of the internal buffer time.

For such cases, it is proposed to reduce the size of the last chunk by using the HTTP "range" feature in order to select only the data useful for the bufferizing process. The rest of the data will then be downloaded later after the start of the playback.

Since this range is expressed in bytes, the number of data bytes according to the duration of the file and the bitrate is evaluated. Here, one makes the approximation that the content bitrate of any portion of the file does not vary a great deal when compared to the content bitrate computed on the whole file.

Insertion of the companion file

Having established a number of TCP connections which have the same amount of data to be downloaded. As mentioned above, the TCP connections will not typically finish the download of A/V data chunks at exactly the same time. Because of various factors, such as packet losses, one TCP connection will "win" over the other. Here, the inventors propose to reuse the TCP connection which finished the download first to receive the companion file. Of course, it will be understood that such an approach will only be applicable to situations in which the A/V files and the companion file are on the same server (because a TCP connection is only between one given client and one given server). Thus, in embodiments, the companion file is downloaded after the A/V data.

As shown in Figure 10, embodiments attempt to make use of any available TCP connections 615 and 625 without significantly increasing the total initialization time. Investigations have shown that it is common to have a difference of about 10% between real throughputs allocated for each TCP connection. In this example of Figure 10, this means that the second connection will complete 200ms before the first one. This time is comparable to the typical download time of the companion file, which is 250ms. Thus, the embodiment of Figure 10 may improve the initialization time by approximately 200ms

It is noted that, to obtain an improvement in initialization time of practical significance, the download time of on any TCP connection should be at least 1-2 seconds (assuming a download time of 250 ms for the companion file). For example, if the download time was only 500ms, the differences between download times of all TCP connections would be about 50ms, which would not provide enough time to download a significant part of the companion file.

Further, it is also noted that the download order proposed (i.e. A/V data followed by the companion file) is not the logical order for a typical streaming application. The 3GP companion file contains information necessary for parsing A/V data into files, and this parsing during reception of data at initialization time is typically done to know the playback duration of data already downloaded. This duration is used to take the decision of starting playback when we reach the buffering time (4 seconds in the examples detailed above).

To address this ordering issue, the following two approaches (a) and (b) are proposed:

(a) Buffering data without parsing

The client need not parse audio/video data before the reception of the companion file. This is possible with embodiments of the invention because the range of A/V data corresponding roughly with the buffering time will have already been selected. Thus, in embodiments, the client does not need to parse A/V data on the fly in order to take the decision of whether to commence playback.

So the proposed approach is:

(i) The player creates an internal buffer 700 which corresponds to the amount of A/V data to be downloaded before reception of the companion file.

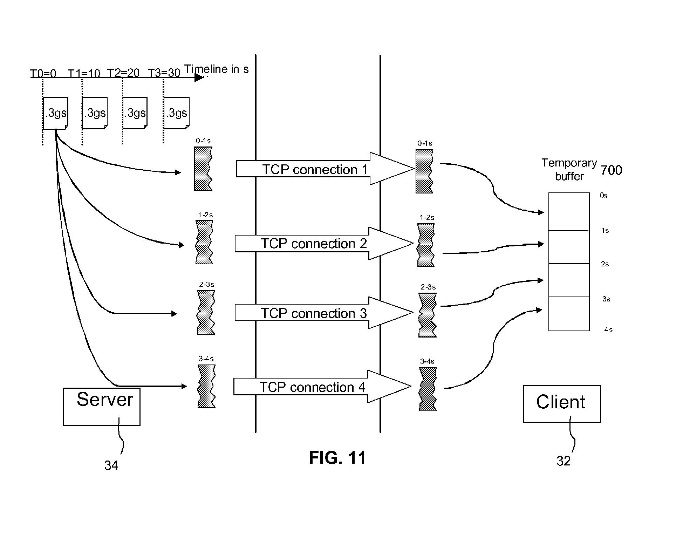

(ii) The player then saves received data in the internal buffer 700. For practical reasons, the location of the saved data in this buffer 700 may correspond with the location of the downloaded data in the original file (See Figure 11).

(iii) The player receives the companion file and initializes the A/V reader with it.

(iv) The player then parses all the data saved in the temporary buffer.

(b) Tuning of the audio/video reader

Approach (a) above may have a memory usage overhead because of the creation of an additional buffer. Also, instead of parsing data on the fly, all the data parsing is done at once just before starting playback, and this can take some computing time. To address such potential drawbacks, the client may instead implement a specific implementation of the A/V data reader. This modified A/V data reader may be adapted to undertake data parsing in two passes.

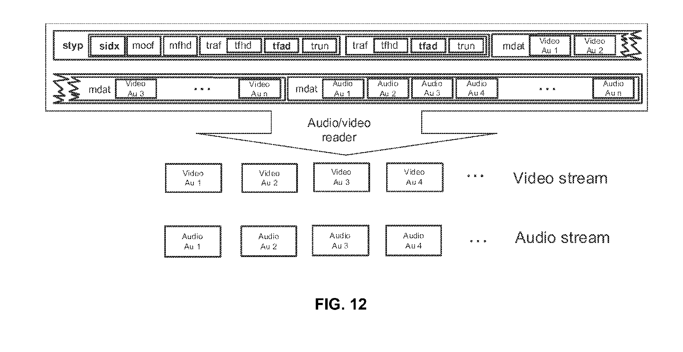

Referring to Figure 12, the 3GP format of the A/V data files is shown.

The role of the A/D data reader is to interpret the 3GP file format in order to extract encoded A/V data corresponding to A/V frames (otherwise referred to as audio and video Access Units (AUs)).

Additionally, the reader informs the following:

- The time associated with each AU; and
- Whether of not the AU is a Random Access Point

The 3GP reader may also analyze more high level information available in the companion file such as:

- The playback duration of the media;
- Decoder specific information associated to audio and video tracks;
- The timescale of each track
- The audio and video output characteristics, such as the resolution, etc.; and
- Which tracks are audio or video.

It is proposed that, in a first pass, the reader extracts the following information from the A/V data file:

- AU compressed data;
- AU timing information expressed in timescale unit; and
- AU Random Access point Information;

This information maybe stored in internal data structures with associated buffers for compressed data. After the first pass, the extracted information may not be sufficient to be read by any A/V decoders. For example, it may not be known if the AUs are audio or Video AUs.

Accordingly, in a second pass, the reader completes information in the internal structures by determining further information from the companion file, such as:

- Which tracks are audio or video tracks;
- The duration of the tracks;
- Decoder specific information associated to both audio and video tracks;
- The timescale of each track, which will allow expression of AU timing information in milliseconds;
- Audio and video output characteristics, such as the video resolution.

It will be appreciated that embodiments of the invention can be used in applications that handle 3GPP Adaptive HTTP streaming protocol. Embodiments will also be applicable for HTTP streaming protocols where there is a small auxiliary file to download before starting playback.

While specific embodiments have been described herein for purposes of illustration, various other modifications will be apparent to a person skilled in the art and may be made without departing from the scope of the concepts disclosed.

**Claims**

1. A method of streaming a media file from a sever hosting the media file to a media playback device via a Transmission Control Protocol, TCP, communication link, the method comprising the steps of:

   splitting the media file into a plurality of file segments;
   allocating a plurality of TCP socket connections between the playback device and the server; and
   transmitting the file segments from the server to the playback device over the allocated plurality of TCP socket connections, wherein at least two of the plurality of the file segments are transmitted over different TCP socket connections.

2. The method of claim 1, wherein the number of allocated TCP socket connections is determined according to at least one of: network characteristics; available resources of the media playback device; and available resources of the server.

3. The method of claim 1 or 2, wherein the number of TCP socket connections used to transmit the file segments is determined according to a number of media files to be streamed.

4. The method of claim 3, wherein the number of segments the media file is split into is determined according to the number of TCP socket connections used to transmit the file segment.

**5.** The method of any preceding claim, wherein the step of splitting the media file comprises:

> splitting the media file into a plurality of intermediate media files; and
> splitting each of the plurality of intermediate media files into a plurality of file segments.

**6.** The method of any preceding claim further comprising the step of receiving a HyperText Transfer Protocol, HTTP, range request, wherein the range request is based on the number of segments each media file is split into.

**7.** The method of any preceding claim, wherein the method further comprises transmitting a companion file from the server to the playback device over a TCP socket connection that has completed transmission of a file segment, the companion file comprising information regarding at least one of: audio characteristics of the media file; video characteristics of the media file; encoding characteristics of the media file; and decoding characteristics of the media file.

**8.** A media server adapted to stream a media file to a media playback device via a Transmission Control Protocol, TCP, communication link, the server comprising:

> a file processing unit adapted to a split the media file into a plurality of file segments;
> a communication unit adapted to allocate a plurality of TCP socket connections between the server and the playback device, and to transmit the file segments from the server to the playback device over the allocated plurality of TCP socket connections, wherein at least two of the plurality of the file segments are transmitted over different TCP socket connections.

**9.** The media server of claim 8, wherein the communication unit is adapted to determine the number of allocated TCP socket connections according to at least one of: network characteristics; available resources of the media playback device; and available resources of the server.

**10.** The media server of claim 8 or 9, wherein the communication unit is adapted to determine to the number of TCP socket connections to use to transmit the file segments according to a number of media files to be streamed.

**11.** The media server of claim 8, 9 or 10, wherein the file processing unit is further adapted to split the media file into a plurality of intermediate media files; and to split each of the plurality of intermediate media files into a plurality of file segments.

**12.** The media server of any of claims 8 to 11, wherein the communication unit is further adapted to transmit a companion file from the server to the playback device over a TCP socket connection that has completed transmission of a file segment, the companion file comprising information regarding at least one of:

> audio characteristics of the media file; video characteristics of the media file; encoding characteristics of the media file; and decoding characteristics of the media file

**13.** A media playback device adapted to stream a media file from a media server via a Transmission Control Protocol, TCP, communication link, the media playback device comprising:

> a communication unit adapted to allocate a plurality of TCP socket connections between the server and the playback device, and to receive a plurality file segments of the media file from the server over the allocated plurality of TCP socket connections, wherein at least two of the plurality of the file segments are transmitted over different TCP socket connections.

**14.** The media playback device of claim 13, wherein the communication unit is further adapted to transmit a companion file to the server over a TCP socket connection that has completed transmission of a file segment, the companion file comprising information regarding at least one of: audio characteristics of the media file; video characteristics of the media file; encoding characteristics of the media file; and decoding characteristics of the media file.

**15.** A computer program comprising computer code means adapted to perform all of the steps of any of claim 1 to 7 when said program is run on a computer.

FIG. 1

T0=0   T1=10   T2=20   T3=30   T4=40   T5=50   T6=60   Timeline in seconds

30 ⟶ [.ts] [.ts] [.ts] [.ts] [.ts] [.ts] [.ts]   stream Bitrate: 128000

30 ⟶ [.ts] = audio/video data files downloaded and played by streaming client

**FIG. 2**

Client ⟲ 32      34 ⟲ Server

Session description
exchange

GET *http://example.com/session.m3u8*

OK + *session.m3u8 file transfer*

.m3u

Audio video data
exchange

GET *http://example.com/fileSequence0001.ts*

OK + *fileSequence0001 file transfer*

.ts

. . .

GET *http://example.com/fileSequence2682.ts*

OK + *fileSequence2682 file transfer*

.ts

**FIG. 3**

FIG. 4

**Compute connection repartitions**

$$NAConn = INT(\frac{(ABitrate \times NConn) + ABitrate + VBitrate - 1}{VBitrate + ABitrate})$$

$$NVConn = NConn - NAConn$$

**Compute number of files**

$$NAFile = INT(\frac{BTime + AFDuration - 1}{AFDuration})$$

$$NVFile = INT(\frac{BTime + VFDuration - 1}{VFDuration})$$

**Correct number of used connections**

$$NAConn = INT(\frac{NAConn}{NAFile}) \times NAFile$$

$$NVConn = INT(\frac{NVConn}{NVFile}) \times NVFile$$

**Compute number of file splits**

$$NASplit = INT(\frac{NAConn}{NAFile})$$

$$NVSplit = INT(\frac{NVConn}{NVFile})$$

NVFile==1?
&& NVConn>1

NO    YES

NAFile==1?
&& NAConn>1

NO    YES

**Compute Range for n files**

*For video:*
*RANGE(X)= (X-1)x(VBitrate x VFDuration/NVSplit)*
*    – (X x VBitrate x VFDuration/NVSplit)*

*For audio:*
*RANGE(X)= (X-1)x(ABitrate x AFDuration/NASplit)*
*    – (X x ABitrate x AFDuration/NASplit)*

**Compute Range for 1 file**

*For video:*
*RANGE(X)= (X-1)x(VBitrate x BTime/NVSplit)*
*    – (X x VBitrate x BTime/NVSplit)*

*For audio:*
*RANGE(X)= (X-1)x(ABitrate x BTime/NASplit)*
*    – (X x ABitrate x BTime/NASplit)*

**FIG. 5**

**FIG. 6**

**Test on HSDPA**

FIG. 7

**Test on WIFI**

FIG. 8

**FIG. 9**

Timeline

Download of
Manifest file

.3gm

Download of
first
Audio/video chunk

.3gs
0-2s

TCP connection 1     615

Download of
second
Audio/video chunk

.3gs
2-4s

Download of
companion file

.3gp

Download of
third
Audio/video chunk

.3gs
4-10s

TCP connection 2     625

Playback Start

**FIG. 10**

FIG. 11

| styp | sidx | moof | mfhd | traf | tfhd | tfad | trun | traf | tfhd | tfad | trun | mdat | Video Au 1 | Video Au 2 |

| mdat | Video Au 3 | · · · | Video Au n | mdat | Audio Au 1 | Audio Au 2 | Audio Au 3 | Audio Au 4 | · · · | Audio Au n |

Audio/video reader

| Video Au 1 | Video Au 2 | Video Au 3 | Video Au 4 | · · · | Video stream |

| Audio Au 1 | Audio Au 2 | Audio Au 3 | Audio Au 4 | · · · | Audio stream |

FIG. 12

**EUROPEAN SEARCH REPORT**

Application Number

EP 11 15 0753

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/262257 A1 (MAJOR R D [US] ET AL) 24 November 2005 (2005-11-24) * paragraphs [0003], [0012], [0016], [0047], [0051]; claims 20,21; figure 3 * * paragraph [0057] - paragraph [0064] * | 1-15 | INV.<br>H04N7/173<br>H04L29/06<br>H04N21/845<br>H04N21/61<br>H04N21/63<br>H04N21/2385<br>H04N21/438<br>H04N7/24 |
| X | YUAN-TSE YU ET AL: "ATCP+: An Adaptive TCP-Trunking Flow Control Scheme for Video Streaming", Proceedings of the 2009 International Conference on Wireless Communications and Mobile Computing (IWCMC'09), June 21-24, 2009, Leipzig, Germany, 24 June 2009 (2009-06-24), pages 1136-1140, XP007910080, DOI: 10.1145/1582379.1582628 ISBN: 978-1-60558-569-7 Retrieved from the Internet: URL:http://portal.acm.org/citation.cfm?doi d=1582379.1582628 [retrieved on 2009-10-08] * abstract; figures 1,5 * * section 1 "Introduction" * * section 3 " Adaptive TCP-Trunking Flow Control (ATCP+)" * | 1-15 |  |
| X | KUSCHNIG R ET AL: "Improving Internet Video Streaming Performance by Parallel TCP-Based Request-Response Streams", CONSUMER COMMUNICATIONS AND NETWORKING CONFERENCE (CCNC), 2010 7TH IEEE, IEEE, PISCATAWAY, NJ, USA, 9 January 2010 (2010-01-09), pages 1-5, XP031642982, ISBN: 978-1-4244-5175-3 * abstract; figures 3,4 * * section IV "Request-Response-Based Client-Driven Streaming" * | 1-15 |  |

TECHNICAL FIELDS
SEARCHED (IPC)

H04N
H04L

-/--

The present search report has been drawn up for all claims

| Place of search | Date of completion of the search | Examiner |
|---|---|---|
| Munich | 5 August 2011 | Kopilovic, Ivan |

Europäisches
Patentamt

European
Patent Office

Office européen
des brevets

# EUROPEAN SEARCH REPORT

**Application Number**

EP 11 15 0753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DESHPANDE, S: "Adaptive Timeline Aware Client Controlled HTTP", MULTIMEDIA ON MOBILE DEVICES 2009, 19-20 JANUARY 2009, SAN JOSE, CALIFORNIA, US, PROCEEDINGS OF SPIE, vol. 7256,725606, 28 January 2009 (2009-01-28), pages 1-8, XP040494383, DOI: 10.1117/12.806059 * the whole document * | 1-15 | |
| X | QUALCOMM EUROPE: "HTTP Streaming: Static Content Serving Mode", 3RD GENERATION PARTNERSHIP PROJECT (3GPP) TECHNICAL DOCUMENT S4-AHI084, 3GPP MEETING (WORKING GROUP "TSG SA WG4"), 28 SEPT - 1 OCT 2009, SEATTLE, WA, USA, 1 October 2009 (2009-10-01), pages 1/4-4/4, XP050398771, [retrieved on 2009-09-24] * section 4.1 "Support of HTTP partial GET in CNDs" * * section 4.2 "Multi-Segment requests" * | 1-15 | |
| X | NOKIA CORPORATION: "HTTP Streaming", 3RD GENERATION PARTNERSHIP PROJECT (3GPP) TECHNICAL DOCUMENT S4-090422, 3GPP MEETING (WORKING GROUP "TSG SA WG4"), JUNE, 22-26, 2009, YSTAD, SWEDEN, 17 June 2009 (2009-06-17), pages 1/2-2/2, XP050356711, [retrieved on 2009-06-17] * section 3 "Data Delivery" * | 1-15 | |

**TECHNICAL FIELDS
SEARCHED (IPC)**

-/--

The present search report has been drawn up for all claims

| Place of search | Date of completion of the search | Examiner |
|---|---|---|
| Munich | 5 August 2011 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 15 0753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU, Q: "HTTP streaming optimization Problem Statement", WORKING DOCUMENT "DRAFT-WU-HTTP-STREAMING-OPTIMIZATION-PS-00.TXT" OF THE INTERNET ENGINEERING TASK FORCE (IETF), INTERNET SOCIETY (ISOC) 4, RUE DES FALAISES CH- 1205 GENEVA, SWITZERLAND, 5 July 2010 (2010-07-05), pages 1-19, XP015069722, [retrieved on 2010-07-05] * abstract * * section 1 "Introduction" * * section 3.2 "Media Presentation" * * section 8.2 "Streaming Content Transmission" * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 5 August 2011 | Kopilovic, Ivan |

| Patent document cited in search report | Publication date | Patent family member(s) | Publication date |
|---|---|---|---|
| US 2005262257 A1 | 24-11-2005 | AU 2005241481 A1 | 17-11-2005 |
| | | CA 2564861 A1 | 17-11-2005 |
| | | EP 1743249 A2 | 17-01-2007 |
| | | JP 2007535881 A | 06-12-2007 |
| | | KR 20070061768 A | 14-06-2007 |
| | | WO 2005109224 A2 | 17-11-2005 |